# FASCICULE DE BREVET EUROPEEN

(11) **EP 4 017 659 B1**
(45) Date de publication et mention de la délivrance du brevet: **29.03.2023**
(21) Numéro de dépôt: 21801493.4
(22) Date de dépôt: 27.10.2021
(51) Int. Cl.: B21D 5/00, B21D 5/02, B21D 37/14, B21D 43/10, B21D 43/11, B21D 43/02, G05B 19/418, B25H 3/00, B65H 1/08, B25H 3/04

(54) **ENSEMBLE DE MOYENS DE RANGEMENT ET STOCKAGE POUR CELLULE DE PLIAGE DE TOLES ENTIEREMENT AUTOMATISEE**
VOLLAUTOMATISCHE BLECH-BIEGEZELLE
FULLY AUTOMATED CELL FOR FOLDING SHEETS

(30) Priorité: 28.10.2020 EP 20204355; 10.02.2021 EP 21156189; 02.03.2021 EP 21160343
(43) Date de publication de la demande: 29.06.2022
(73) Titulaire: Concept & Forme Developpements SA, 5170 Profondeville (BE)
(72) Inventeur: PITANCE, Gérard, 5170 Profondeville (BE)
(74) Mandataire: AWA Benelux
(86) Numéro de dépôt international: PCT/EP2021/079776
(87) Numéro de publication internationale: WO 2022/090287

(56) Documents cités:
- EP-A2- 2 138 247
- WO-A1-2012/063710
- DE-U1-202013 004 648
- US-A1- 2020 009 638

## Description

### Objet de l'invention

La présente invention se rapporte, au sein d'un ensemble cohérent de solutions techniques destinées à accroître l'autonomie de fonctionnement sans assistance humaine, la flexibilité ainsi que la productivité d'une cellule de pliage automatisée, à une installation hautement autonome composée d'une cellule de pliage de tôles automatisée couplée à un magasin automatisé, comprenant des éléments de rangement communs, standardisés, universels et interchangeables.

### Arrière-plan technologique et état de la technique

Une analyse approfondie de l'état de l'art a été effectuée par les inventeurs. Elle est synthétisée ci-après :

### L'importance du magasin automatisé

Un simple survol du plan d'affectation des espaces d'un atelier de tôlerie suffit à appréhender l'importance des surfaces dédiées aux flux logistiques. Une analyse plus approfondie des coûts de manutention directs (*) et indirects (**) révélera ensuite la part importante que représentent les flux logistiques internes dans le coût de fonctionnement de l'atelier (***).¹
¹ (*) Manutentions effectuées par l'opérateur du poste de travail ou de la machine. (**) Manutentions effectuées par du personnel logistique dédié. (***) 25 à 35% des coûts de main d'oeuvre directs et indirects.

Il est connu que le concept d'industrie 4.0 correspond à une nouvelle façon d'organiser les moyens de production. Cette nouvelle industrie s'affirme comme la convergence du monde virtuel, de la conception numérique, de la gestion (opérations, finance et marketing) avec les produits et objets du monde réel. On parle souvent de quatrième révolution industrielle. L'implémentation du concept 4.0 ne consiste donc pas simplement à doter l'atelier d'outils de production plus ou moins automatisés mais bien à appréhender globalement l'ensemble des fonctions de l'atelier et leurs interactions en vue :
- d'optimiser les flux de matières premières, de pièces découpées et de pièces façonnées ;
- de planifier et fiabiliser l'approvisionnement des machines de production et d'en optimiser le taux d'exploitation ;
- de sécuriser les opérations de manutentions ;
- de réduire la dépendance vis-à-vis du facteur humain et concentrer les ressources humaines sur les tâches valorisantes et à forte valeur ajoutée.

Dans l'usine de tôlerie 4.0, l'automatisation des machines de découpe et de formage des tôles est donc indissociable du magasin automatisé auquel elles sont connectées, dans tous les sens du terme, et qui constitue en quelque sorte la colonne vertébrale de l'atelier.

Si la plupart des fabricants ont résolu, ou sont en passe de résoudre, les problèmes liés à l'approvisionnement automatique des machines de découpe ainsi que la fiabilisation des opérations de découpe elles-mêmes, il n'en va pas encore de même pour l'optimalisation des flux et l'automatisation des processus de formage des tôles où de nombreux progrès sont encore attendus afin de rendre ces outils et les investissements lourds qu'ils représentent véritablement rentables.

Après un long travail d'exploration du marché et des rencontres avec les principaux acteurs du secteur, on a constaté qu'en définitive l'usine de tôlerie 4.0 demeurera une utopie aussi longtemps que le niveau d'autonomie des machines de formage de la tôle et des cellules de pliage robotisées en particulier ne sera pas aligné sur celle des machines de découpe.

### Les machines de formage de la tôle

Dans le travail de comparaison par les inventeurs des différentes techniques de formage de la tôle et des niveaux d'automatisation qu'elle procurent, on a avant tout cherché à bien comprendre les possibilités et surtout les limites de technologies aussi différentes que :
- les panneauteuses ;
- les plieuses à tablier qui ont connus ces dernières années des évolutions spectaculaires ;
- les presses-plieuses conventionnelles.

### Résumé de l'analyse comparative des techniques de pliage et de leur adaptabilité au concept 4.0

Si les panneauteuses constituent incontestablement la technologie la plus proche du concept 4.0 en termes d'automatisation, elles sont aussi les plus limitatives en termes de possibilités de mise en oeuvre. A titre d'exemple, on a constaté que, l'activité spécifique des inventeurs, moins de 5% des pièces sont compatibles avec les contraintes du panneautage. Conscients de ces limites, les fabricants de panneauteuses proposent désormais de les coupler à une presse-plieuse, robotisée ou manuelle, mais il est évidemment impossible d'équilibrer la charge de ce tandem de machines, ce qui compromet leur rentabilité.

Les plieuses à tablier ont aujourd'hui atteint un excellent niveau d'automatisation et offrent des possibilités de formage plus étendues que les panneauteuses tout en étant nettement moins rapides cependant. Dans ce type de machine, la présence d'un opérateur est incontournable et les possibilités de mise en oeuvre restent trop limitées, notamment lorsque les pièces comportent des plis à leur dos ou qu'elles proviennent d'une poinçonneuse où elles ont fait l'objet d'opérations de déformation (crevés, petits emboutissages, nervurages, etc.).

Les principaux avantages des presses-plieuses conventionnelles résident dans leurs possibilités de mise en oeuvre très étendues et dans leur souplesse d'adaptation aux quantités à produire. Le tandem presse-plieuse à CNC (machine-outil à commande numérique) servie par un opérateur reste encore le plus souvent l'investissement le plus souple et le plus rentable, d'autant plus si la production est localisée dans un pays dont la main d'oeuvre est à bas coût.

L'automatisation des presses-plieuses est ainsi devenu un enjeu important pour tous les fabricants de ce type de machines.

Certains proposent désormais des systèmes de montage automatique des outils intégrés à la machine, comme par exemple SALVAGNINI (ATA System), TRUMPF (ToolMaster System), AMADA (ATC System), BYSTRONIC (Xpert Tool Changer System), etc. Le principal intérêt de ce type d'asservissement réside dans le confort accru de l'opérateur. Le retour sur investissement est cependant difficile à percevoir. La réduction du temps de « set-up » est également très relative et n'est jamais à la mesure du coût très élevé de cette option.

Les cellules de pliage automatisées sont, encore aujourd'hui, des outils réservés avant tout à des productions de grandes séries et/ou de pièces trop grandes ou trop lourdes à manipuler pour un seul opérateur.

Malgré les nombreux progrès accomplis, aucun fabricant n'est aujourd'hui en mesure de proposer une cellule de pliage robotisée capable de fonctionner sans assistance durant plus de huit heures consécutives. De plus, cette performance toute relative est fortement conditionnée par la conjugaison de divers paramètres tels que : taille de lots (séries), volumétrie des pièces pliées, possibilités de préhension, etc.

Une cellule de pliage robotisée représente un investissement lourd dont le taux d'exploitation est encore fortement limité par un faible niveau d'autonomie et par la dépendance au facteur humain. C'est la raison pour laquelle la très grande majorité des ateliers continue à privilégier la solution d'une machine numérique servie par un opérateur.

Le document US 2018/345478 A1 divulgue une desserte d'atelier permettant le stockage d'une grande variété d'outils différents, grâce notamment à un panneau vertical reprenant un ensemble d'ouvertures espacées de manière régulière pour y insérer des crochets et suspendre des porte-outils à hauteur souhaitée (figures 50, 57, 79). Ce document ne fait en aucun cas référence à une cellule de pliage ou à un magasin automatisé, et ne ressort pas du domaine des cellules de pliage automatisées.

Le document EP 2 138 247 A2 divulgue un système de production contenant une presse-plieuse, avec deux types de porte-outils. Le premier est un porte-outil fixe et situé dans la presse-plieuse, tandis que le second est mobile (ou fixe) et situé en dehors de la presse-plieuse. Un manipulateur permet de déplacer les outils d'un porte-outils à l'autre afin que la presse-plieuse ait toujours les outils adéquats à disposition. Le manipulateur peut aussi déplacer les pièces façonnées ou non, et les poser sur des palettes à proximité. Le manipulateur se déplace sur un track. Le porte-outils en dehors de la presse-plieuse peut être équipé d'un moyen d'entraînement et communiquer avec le dispositif de commande de telle sorte qu'il soit capable d'aller chercher ou amener automatiquement des outils ou des pinces dans un magasin, par exemple un magasin à élévateur.

Le document US 2020/316669 A1 divulgue de manière générale un ensemble de presses-plieuses pouvant être approvisionnées par des AGV. Les AGV permettent de diminuer le temps d'arrêt des presses-plieuses en amenant les outils souhaités directement à l'intérieur de celle-ci. Aucun système de porte-outils n'est pas divulgué dans ce document.

Le document WO2012063710A1 divulgue une main robotisée permettant de plier des tôles. Le pliage est réalisé à l'aide d'un outil de maintien de la pièce à plier par aspiration et d'une paire d'outils de préhensions pour saisir les deux extrémités de la pièce à plier. Plus précisément, ce document divulgue une installation autonome composée d'une cellule de pliage de tôles automatisée et d'un magasin automatisé auquel la cellule de pliage est couplée, comprenant un ensemble d'éléments destinés à être utilisés pour la fixation de préhenseurs et ainsi faire office de dispositif de fixation de préhenseurs, et pour l'échange de préhenseurs entre la cellule et le magasin automatisé, ledit ensemble d'éléments comprenant :
- des parois de fixation pour préhenseurs, et
- des structures portantes pour supporter les parois de fixation, les structures portantes étant conçues pour permettre une fixation au sol des parois de fixation.

### Position du problème général

Une analyse détaillée montre que l'invention ou les inventions doivent poursuivre les différents objectifs généraux suivants :
1. Objectifs conceptuels
   L'objectif principal est de rendre les cellules de pliage compatibles avec le concept 4.0, ce à quoi elles ne peuvent prétendre aujourd'hui. La cellule idéale devrait pouvoir fonctionner, sans aucun opérateur, le samedi et le dimanche sans discontinuité, soit 48 heures d'autonomie totale sans aucune assistance humaine mais avec *ad minimum* un niveau de productivité comparable à celui d'une presse-plieuse de dernière génération servie par un opérateur compétent et motivé.
2. Objectifs techniques.
   - Solutionner tous les problèmes qui limitent aujourd'hui l'autonomie de la cellule et qui font dire à tous les fabricants, sans exception, qu'une cellule de pliage ne peut fonctionner au mieux que quelques heures sans opérateur, et en particulier :
      - Approvisionner automatiquement la cellule en pièces à plier, et ce en assurant la disponibilité de celles-ci ;.
      - Evacuer automatiquement des pièces pliées.
      - Assurer la disponibilité au sein de la cellule du nombre de préhenseurs, respectivement du nombre d'outils de pliage, permettant de garantir 48 heures d'autonomie totale sans assistance humaine.
   - Maximiser la productivité de la machine en réduisant les lourdeurs de fonctionnement mises en évidence ci-dessus. La productivité horaire moyenne de la cellule et du robot devrait être au minimum équivalente à celle d'une presse-plieuse conventionnelle de nouvelle génération servie par un opérateur motivé et expérimenté. Ceci doit être vrai non seulement pour les pièces lourdes et encombrantes où la machine est généralement plus productive qu'un opérateur, mais aussi pour les pièces où la dextérité de l'homme surpasse habituellement le robot en rapidité d'exécution, et en particulier :
      - Réduire les temps de montage et démontage des outils de pliage.
      - Supprimer l'opération de contrôle d'indexage des pièces à plier et la remplacer par un système de reconnaissance optique.
      - Optimiser les déplacements du robot sur le track par une refonte globale de l'architecture de la cellule.
3. Objectifs économiques
   Plus le prix de la cellule sera attractif, plus ces outils seront accessibles à un grand nombre d'utilisateurs potentiels et plus sera élevé le nombre de machines (ROI sur 5 ans, possibilité de phasage de l'investissement, réduction du rôle de l'opérateur et des coûts y afférents).
4. Objectifs liés aux différents profils industriels
   Dans l'optimisation de la cellule de pliage, les inventeurs ne se sont pas contentés de réfléchir à des solutions répondant à leurs propres besoins mais ont également pris en compte les attentes d'autres profils d'utilisateurs.
   - Type d'activités : sous-traitance tôlerie, production propre, activité à forte saisonnalité, etc.
   - Organisation de la production :
      - Grandes séries récurrentes.
      - Grandes quantités annuelles mais production en flux tendu par petits batchs, lean production.
      - Petites séries récurrentes.
5. Objectifs liés aux contraintes d'intégration d'une cellule robotisée
   L'emprise au sol d'une cellule de pliage robotisées n'est pas négligeable. Une architecture de cellule compacte élargirait les possibilités d'intégration à des ateliers où l'espace est compté, sans compromettre pour autant les objectifs de productivité et d'autonomie. Les solutions qui offrent plus de liberté doivent donc être privilégiées.
6. Objectifs liés aux interactions de la cellule avec les autres postes de l'atelier
   Ainsi que décrit ci-dessus, le magasin automatisé est réellement la colonne vertébrale de l'atelier de tôlerie 4.0. Il doit représenter également une part importante de la solution si l'on veut amener les cellules de pliage robotisées à une niveau équivalent à celui des machines de découpe.

### Buts de l'invention

En résumé, l'invention a pour principaux buts :
1. Une autonomie de fonctionnement de 48 heures ou plus.
2. Ce niveau d'autonomie ne peut en aucun cas être conditionné par la présence d'un opérateur, fût-ce même par intermittence.
3. L'objectif d'accroissement de l'autonomie doit aller de pair avec une amélioration de la flexibilité de la cellule, notamment dans le cas de petites séries récurrentes nécessitant une grande diversité d'outils de pliage et de préhenseurs.
4. Tous les éléments nécessaires à la cellule pour atteindre les objectifs visés, doivent être présents dans la cellule ou doivent pouvoir être amenés dans celle-ci, ou évacués hors de celle-ci, de manière entièrement automatique et programmable, ces éléments comprenant notamment et à titre non exhaustif :
   - les outils de pliage standards ;
   - les outils de pliage spéciaux ;
   - les outils réservés à l'usage exclusif d'un client ;
   - les préhenseurs universels ;
   - les préhenseurs spécifiques ;
   - les accessoires permettant d'optimiser l'empilage des pièces pliées et/ou de protéger les pièces fragiles ;
   - les contenants destinés au « dropping » en vrac de pièces de faible encombrement ;
   - les systèmes de palettisation destinés à l'approvisionnement de la cellule en pièces à plier ;
   - les systèmes de palettisation destinés à la réception des pièces pliées ;
   - les systèmes de palettisation mixtes ou plurifonctionnels ;
   - les organisateurs de commandes, etc.

### Principaux éléments caractéristiques de l'invention

Un premier aspect de la présente invention se rapporte à une installation autonome selon la revendication 1.

Selon des formes d'exécution particulières de l'invention, l'installation comporte en outre une des caractéristiques suivantes ou une combinaison appropriée de plusieurs d'entre elles :
- les parois de fixation sont métalliques et rigidifiées par un ou plusieurs pliages, pouvant leur conférer un caractère autoportant et sont conçues pour être disposées verticalement, obliquement ou horizontalement ;
- le support de préhenseur comprend une platine de fixation perforée avec, côté externe, au moins trois, et de préférence quatre entretoises terminées par un axe à épaulement, la rainure de l'axe à épaulement étant destinée à recevoir une platine de fixation de préhenseur, chaque entretoise étant munie côté interne d'un moyen de fixation, par exemple un filetage ou un moyen de fixation rapide, à la paroi perforée de fixation ;
- la platine de fixation de préhenseur est solidaire d'une tête mécanique du préhenseur et comprend au moins trois, et de préférence quatre trous de position correspondante à celle des entretoises du support de préhenseur, chaque trou se présentant comme un passage de forme entre deux trous de diamètres différents et décalés l'un par rapport à l'autre, un trou de centrage et une trou de blocage respectivement ;
- le trou est asymétrique, par exemple en forme de poire, de trou de serrure ou de trèfle à quatre feuilles ;
- le support d'outil de pliage comprend un profil métallique, par exemple en aluminium extrudé, dont une première aile est destinée à la fixation du profil sur la paroi perforée et une seconde aile comporte une rainure destinée à recevoir des poinçons et matrices de pliage ;
- l'installation comprend un premier jeu de palettes disposé dans la zone d'approvisionnement pour l'approvisionnement entièrement automatisé des pièces à plier du magasin automatisé vers la cellule, via la zone d'approvisionnement, et un second jeu de palettes disposé dans la zone de dépose, pour l'évacuation entièrement automatisée des pièces après pliage de la cellule vers le magasin automatisé, via la zone de dépose ;

- la zone d'approvisionnement et la zone de dépose coïncident, de même que le premier jeu et le second jeu de palettes ;
- la cellule de pliage est également couplée au magasin automatisé via un système ou une zone de partages d'outils, de préhenseurs, d'intercalaires ou autres accessoires, situé(e) dans la cellule ;
- l'installation comprend un convoyeur/extracteur de palette à chaîne ou encore un ou plusieurs engins déplacés et guidés automatiquement, par exemple de type AGV pouvant supporter une palette, par exemple au moyen d'un dispositif mécanique à pantographe, pour l'approvisionnement de la cellule en pièces à partir du magasin automatisé, respectivement le retour de pièces de la cellule vers le magasin automatisé.

Un autre aspect de l'invention se rapporte à une utilisation selon la revendication 11. On entend généralement par palettisation une mise sur palettes de marchandises ou une organisation basée sur l'emploi de palettes.

Encore un autre aspect de l'invention se rapporte à une utilisation selon la revendication 12.

### Brève description des figures

Des exemples de réalisation suivant l'état de la technique et suivant l'invention sont décrits par la suite avec plus de détails à l'aides des figures annexées.
La FIG. 1 représente une vue en perspective et une vue en plan d'une cellule de pliage de tôles robotisée selon l'état de la technique.
La FIG. 2 représente une autre forme d'exécution d'une cellule de pliage de tôles automatisée selon la présente invention, dans laquelle la cellule est approvisionnée automatiquement en pièce à plier à partir du magasin automatisé.
Les FIG. 3A-3B représentent une autre forme d'exécution d'une cellule de pliage de tôles automatisée selon la présente invention, dans laquelle il y a à la fois un approvisionnement automatique en pièce à plier et une évacuation automatique des pièces pliées, via le magasin automatisé.
Les FIG. 4A-4B représentent une autre forme d'exécution d'une cellule de pliage de tôles automatisée selon la présente invention, dans laquelle la solution précédente est complétée par le couplage d'un système de partage d'outils/préhenseurs avec le magasin automatisé.
La FIG. 5 représente une autre forme d'exécution d'une cellule de pliage de tôles automatisée selon la présente invention, dans laquelle le « raw in » et le « raw out » sont combinés sur une seule et même palette.
Les FIG. 6A-6G représentent respectivement des éléments de rangement et stockage dans une cellule de pliage de tôles automatisée selon la présente invention, sous forme (d'assemblages) de parois perforées à grille de perforations régulières.
Les FIG. 7A-7F représentent respectivement des éléments de rangement et stockage dans une cellule de pliage de tôles automatisée selon la présente invention, sous forme de structures portantes pour les parois perforées précitées.
Les figures 8A-8D représentent un mode d'exécution de support de préhenseur pour fixation aux parois perforées précitées, selon la présente invention.
Les figures 9A-9E représentent un mode d'exécution de platine de fixation de préhenseur pour fixation aux parois perforées précitées via les supports de préhenseurs précités, selon la présente invention.
Les FIG. 10-11 illustrent des exemples d'assemblages de préhenseurs fixés aux parois perforées.
La FIG. 12 illustre un mode d'exécution de support pour outil de pliage à fixer aux parois perforées précitées.
Les FIG. 13 et 14 illustrent respectivement un système de palettisation mixte et un véhicule à guidage automatique, tous deux équipés d'un support de pièces à parois perforées.

Dans la description qui suit, des éléments similaires dans les illustrations sont affectés dans la mesure du possible de repères numériques identiques. Toutes les dimensions décrites ou suggérées ici ne sont pas destinées à limiter la portée de l'invention, laquelle peut s'écarter de ces dimensions De même, le design spécifique des composants suggéré dans les illustrations n'est nullement limitatif de l'invention.

### Description détaillée de formes d'exécution de l'état de la technique

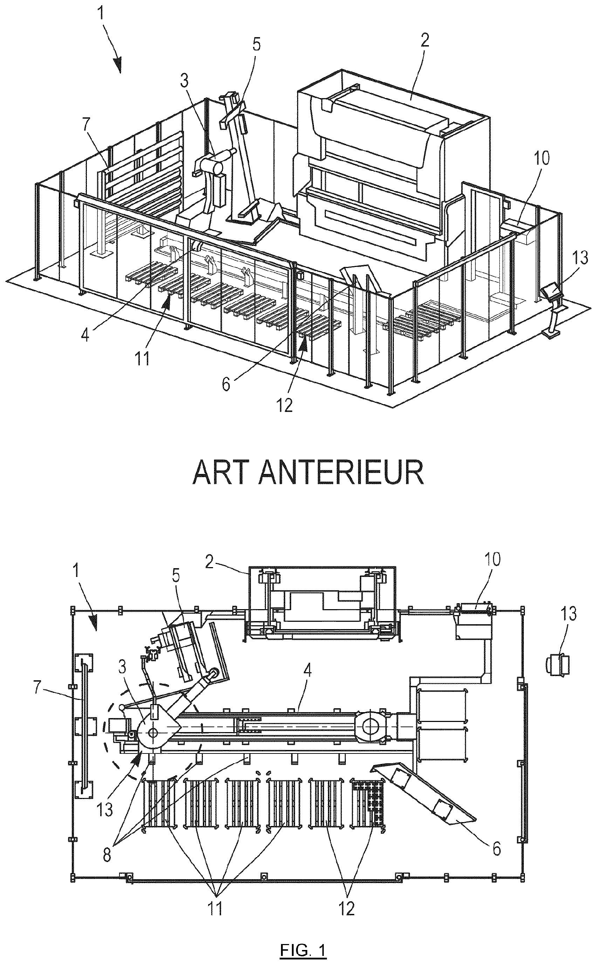

La plupart des cellules de pliage robotisées 1 se ressemblent et sont composées des mêmes fonctions ou de fonctions similaires, comme représenté sur la FIG. 1 :
- une machine de pliage constituée généralement par une presse-plieuse 2 assortie d'un système censé garantir la précision de l'angle de pliage sur toute la longueur du pli ; les ateliers de tôlerie, y compris robotisés, sont généralement équipés de plusieurs presses-plieuses selon le gabarit des pièces à produire ;
- un robot 3 étudié pour s'adapter à toutes les positions requises par le façonnage des pièces et comportant un nombre d'axes lui permettant d'atteindre les fonctions disposées sur tous le périmètre de la cellule. Les caractéristiques techniques du robot répondent à la même logique que celle qui prévaut pour les presses-plieuses. Les pièces lourdes et encombrantes nécessiteront un robot conçu pour manipuler des charges lourdes et doté d'une grande amplitude de mouvement. A l'inverse une petite cellule de pliage utilisera un robot plus petit et plus agile, capable d'une grande vitesse d'exécution et dimensionnellement adapté à la compacité des dimensions de la cellule ;
- un axe de translation linéaire 4, généralement désigné par le terme « track » et permettant au robot 3 de couvrir une large zone de travail et d'atteindre les différentes fonctions disposées dans son champ d'action. Le « track » peut -être posé au sol ou fixé à une paroi ou encore suspendu à une structure portante. Le mode de positionnement du « track » sera également en relation avec le gabarit de la presse-plieuse et du robot, un « track » posé au sol étant plus adapté aux machines de grand gabarit et un « track » suspendu étant plus adapté aux machines de petit gabarit ;
- un espace dédié à l'approvisionnement de la cellule en pièces à plier (*raw in*) 11. Cet espace peut-être simplement constitué d'une surface de dépose plus ou moins grande destinée à recevoir un nombre variable de palettes de pièces à plier (pièces à plat). La logique des gabarits de machines développées dans les points précédents est valable également pour cette fonction de la cellule ;
- un espace dédié à la dépose des pièces après façonnage (*raw out*) 12. La logique des gabarits de machine développées dans les points précédents est valable également pour cette fonction de la cellule. De surcroît, les pièces pliées occupent un volume beaucoup plus important que les pièces à plat, c'est la raison pour laquelle certaines cellules sont parfois dotées d'un ou plusieurs convoyeurs à rouleaux permettant de réduire la fréquence des interventions du manutentionnaire chargé de l'évacuation des palettes de pièces pliées ;
- un magasin 7 dédié aux outils de pliage (poinçons et matrices). La capacité de stockage des magasins d'outils est limitée et varie entre 30 et 160 mètres linéaires incluant poinçons et matrices. Le magasin d'outils peut être constitué d'une simple étagère à outils et c'est le robot de pliage qui effectue, à l'aide d'un préhenseur adapté, le montage et le démontage des outils. Certaines cellules sont équipées d'un magasin d'outils automatisé où des automates auxiliaires procèdent au montage et au démontage des outils, le robot principal étant inactif durant ces opérations. La fréquence des changements d'outils est directement liée à la taille des séries. De petites séries impliquent des changements d'outils très fréquents. C'est la raison pour laquelle les magasins d'outils sont généralement positionnés à côté de la presse-plieuse ou intégrés à celle-ci. La problématique du pliage est complexe dans la mesure où elle doit répondre à un grand nombre de contraintes liées à la fois à la grande diversité et aux spécificités des pièces à fabriquer. On remarquera que :
   - la grande majorité des pliages sont réalisables à partir d'outils standards mais certains pliages nécessitent des outils spéciaux ;
   - des combinaisons d'outils doivent souvent être envisagées. Il s'agit le plus souvent de combinaisons d'outils standards mais des combinaisons d'outils standards et d'outils spéciaux doivent parfois être envisagées également ;
   - les majorité des outils sont utilisables sur les différents gabarits de machines ;
   - la fréquence d'utilisation des outils standards est extrêmement variable, certains étant utilisés très couramment et d'autres plus rarement ;
   - certains outils spéciaux sont réservés à l'usage exclusif des clients qui en ont supporté le coût ;
- un magasin dédié aux outils de préhension 8, constitués de préhenseurs 9 à ventouses, à pinces ou encore magnétiques. Le nombre de préhenseurs nécessaires pour assurer le fonctionnement automatique de la cellule varie fortement en fonction :
   - de la diversité de formes et de dimensions des pièces à fabriquer ;
   - de la taille des séries ;
   - de l'autonomie de fonctionnement souhaitée.

Dans un scénario où la cellule produirait des centaines de pièces identiques par jour, un seul préhenseur serait théoriquement nécessaire. Ce scénario irait cependant à l'encontre du mode de fonctionnement vers lequel évoluent la plupart des ateliers de production et de leurs donneurs d'ordres, qui misent toujours d'avantage sur une production en flux tendu, voire sur une production de type QRM (Quick Response Manufacturing) où les produits sont fabriqués dans l'ordre des commandes et parfois à la pièce._Dans ces conditions, il n'est pas rare que le robot doive utiliser, sur une seule pause de travail de 8h, jusqu'à 10 préhenseurs différents voire d'avantage si l'atelier fonctionne en mode QRM.

L'évolution vers le 4.0 conduit à des productions en mode totalement automatisé et pratiquement ininterrompues, y compris les week-ends, soit avec 6 pauses de 8 heures consécutives. Cette tendance lourde implique, pour une cellule de pliage dont l'ensemble des flux entrants et sortants de la cellule seraient automatisés, que le robot puisse avoir accès, dans l'enceinte de la cellule, à un minimum de 30 à 40 préhenseurs ;
- un cadre de référencement angulaire 6 des pièces à plier, parfois appelé table de centrage. Cette fonction est parfois remplacée par un système optique (caméra) placé sur la tête du robot et permettant à celui-ci de corriger automatiquement l'angle de préhension ;
- un système de contrôle d'épaisseur permettant de vérifier que deux pièces ne sont pas collées l'une à l'autre et risqueraient de ce fait d'endommager les outils de pliage (non représenté). Le système de contrôle d'épaisseur est parfois associé au cadre de référencement angulaire afin de réunir en une seule étape les deux opérations ;
- un dispositif de repositionnement de la pièce en cours de pliage 5 permettant de déposer la pièce en vue d'un changement de préhenseur durant la phase de pliage ou encore pour permettre un changement de position du préhenseur. Ce système de dépose est généralement constitué de deux bras parallèles équipés de ventouses et dont l'écartement peut varier, l'écartement des bras étant programmable en fonction des dimensions de la pièce. Le système de repositionnement est généralement implanté dans le périmètre du rayon d'action du robot lorsque le robot se trouve face à la presse-plieuse ;
- un système de programmation et de monitoring 10 de la presse-plieuse ;
- une console de commande 13.

### Analyse critique de fonctions importantes de la cellule de pliage standard

### Le magasin d'outils

Dans la solution actuelle de BYSTRONIC par exemple, le magasin d'outils est axé sur le track et perpendiculaire à celui-ci.

Il semble évident que la capacité de stockage de l'étagère à outils influence directement le niveau d'autonomie de la cellule. Il est bien entendu possible d'apporter d'autres outils à la cellule mais cela consomme un temps précieux et cette option n'est pas compatible avec l'idée d'un fonctionnement automatisé.

Les dimensions de l'étagère à outils sont actuellement limitées pour plusieurs raisons :
- le robot ne peut pas se déplacer parallèlement au rack à outils compte tenu de la position de l'étagère perpendiculaire au track ;
- la largeur de l'étagère (3,2 m) est donc déterminée par les limites des mouvements de pronation/supination du bras du robot ainsi que par la distance qui sépare l'extrémité du track de l'étagère ;
- la hauteur de l'étagère est actuellement limitée à 2,3 m alors que l'amplitude des mouvements d'extension et de pronation/supination du bras du robot autoriserait une hauteur d'étagère de 3m.

La maximisation de la capacité de stockage du rack à outils est un objectif important à inscrire au cahier des charges général de la cellule.

Le principal mérite de la solution apportée par BYSTRONIC au problème que représente le stockage des outils de pliage réside dans sa simplicité et de son faible impact sur le coût de la cellule. C'est le robot qui monte et démonte les outils.

En comparaison, les systèmes de magasins automatisés proposés par TRUMPF (ToolMaster), AMADA (ATC System) ou encore LVD (Toolcell System) sont clairement beaucoup trop complexes, trop onéreux et anormalement lents. Ces systèmes sont totalement surdimensionnés par rapport au but poursuivi.

La simplicité de la solution consistant à utiliser le robot pour le chargement et le déchargement des outils pourrait être fortement optimisée, à faible coût, par une refonte du rack de stockage et de l'organisation spatiale de la cellule, avec comme objectif de réduire de manière significative les temps de montage et de démontage des outils. Un bon objectif serait de réduire le temps de « set-up » moyen actuel de 60% car cela rendrait caduque l'a priori selon lequel une cellule de pliage n'est pas compatible avec les petites séries de pièces.

### Les préhenseurs et leur dispositif de rangement

La disposition des préhenseurs le long du track est avantageuse, tant en termes d'accessibilité que d'optimisation de l'espace et des temps de chargement. Les supports de préhenseurs sont fixés au sol à intervalle régulier ce qui limite le nombre de préhenseurs.

Comme pour les outils de pliage, la maximisation du nombres de préhenseurs disponibles au sein de la cellule est une condition incontournable si l'on veut accroître l'autonomie de la cellule et faire en sorte que les cellules de pliage atteignent un niveau d'automatisation comparable à celui des machines de découpe.

### Flux entrants et sortants d'une cellule de pliage robotisée

Ces flux entrants et sortants sont les suivants :
*F1. Introduction dans l'enceinte de la cellule de palettes de pièces à plier*
   Les dimensions des palettes doivent être adaptées à la dimension des pièces à plier. Une même palette peut contenir plusieurs séries de pièces à plier.
*F2. Evacuation de la (des) palette(s) vide(s) après façonnage de l'ensemble des pièces qu'elle contenait*
   La palette vide doit forcément ressortir par où elle est entrée et être restockée en vue de sa réutilisation.
*F3. Introduction dans l'enceinte de la cellule de palettes ou de supports vides destinés à recevoir les pièces pliées*
   Les pièces pliées sont plus encombrantes que les pièces à plat. En fonction de la dimension des pièces à plier, de la taille des séries et des possibilités d'empilage des pièces, plusieurs palettes peuvent s'avérer nécessaires à l'évacuation de pièces introduites dans la cellule sur une palette unique.
*F4. Evacuation des palettes de pièces pliées*
   Aujourd'hui, dans plus de 95% des cas, les palettes de pièces pliées sont évacuées par un opérateur aidé d'un élévateur ou d'un transpalette. Des véhicules automatisés (AGV) commencent cependant à faire leur apparition et pourraient théoriquement se substituer à l'opérateur pour le déplacement automatique des palettes. Toutefois, le trafic que représenteraient ces véhicules extrêmement lents, s'ils devaient se généraliser, poserait de nombreux problèmes en termes de croisements de flux et de circulation dans des ateliers où l'espace est bien souvent un véritable luxe. L'empilage de pièces pliées complexes, de formes asymétriques ou de grand format conduit souvent à une saturation très rapide de la zone de dépose et/ou à devoir évacuer des palettes ne contenant que quelques pièces, voire même parfois une pièce unique. Ce cas de figure qui est loin d'être rare nécessite des interventions rapprochées d'un seul manutentionnaire souvent en charge de plusieurs machines et dont le manque de disponibilité conduit parfois à des temps d'attente durant lesquels le tandem robot/presse-plieuse est à l'arrêt.
*F5. Introduction dans l'enceinte de la cellule d'équipements complémentaires stockés dans le magasin automatisé*
   Une fois pliée, la pièce devient plus encombrante et si sa forme est asymétrique la superposition de plusieurs lits de pièces peut poser problème, notamment lorsque la pièce est longue et étroite. Il est d'usage très courant dans les ateliers de pliage d'utiliser des plaques intercalaires qui, une fois déposées sur un premier lit formé de pièces juxtaposées permettent de créer un second lit de pièces, voire plusieurs, afin de maximiser le nombre de pièces stockées sur une même palette. Dans une cellule dont tous les flux entrants et sortants devraient être automatisés en vue d'accroître l'autonomie de fonctionnement sans assistance, il serait donc important qu'un certain nombre d'équipements complémentaires, comme ces intercalaires, puissent être acheminés automatiquement à l'intérieur de la cellule afin que le robot puisse disposer de ce qui lui est nécessaire pour accomplir son travail. D'autres équipements complémentaires sont couramment utilisés en vue de la réalisation des opérations de pliage ou de la facilitation des tâches effectuées par le robot. Parmi ces équipements on peut citer à titre exemplatif et non exhaustif :
   - des outils de pliage spéciaux ;
   - des outils de pliage ou des préhenseurs réservés à l'usage exclusif de clients ;
   - des préhenseurs de grandes dimensions et encombrants ;
   - des supports permettant un positionnement paramétrable des outils ou équipements introduits dans la cellule ;
   - des contenants destinés au « dropage » en vrac de pièces de petites dimensions ;
   - des organisateurs de commande ;
   - des supports permettant le positionnement de pièces fragiles dont l'état de surface doit être particulièrement préservé ;
   - des accessoires permettant d'assurer le maintien et la stabilité des pièces empilées, etc.
*F6. Introduction dans l'enceinte de la cellule d'outils partagés entre plusieurs cellules*
   Cette solution technique vise à partager ou à échanger, de manière automatique et programmable, entre plusieurs cellules, des outils disposés sur des supports paramétrables, en profitant de la grande flexibilité du magasin automatisé, permet(trait) de flexibiliser le fonctionnement de l'atelier et de réduire le coût que représente(raient) les outils partagés s'ils devaient être présents dans chaque cellule.

### Description détaillée de l'invention

Atteindre les 4 principaux objectifs cités ci-dessus suppose d'avoir identifié et résolu les multiples problèmes qui constituent aujourd'hui autant de barrières à l'efficacité globale d'une cellule de pliage.

A ce problème global, il ne peut y avoir qu'une réponse globale. Si une seule des conditions garantes du niveau d'autonomie visé est absente, elle mettra inévitablement à mal l'objectif principal dans sa globalité.

Cette réponse globale résulte d'une combinaison inédite selon l'invention de fonctions techniques connues, utilisées par tous les fabricants de machines de tôlerie en général et de cellules de pliage robotisées en particulier.

Parmi ces fonctions techniques connues et concernées par l'invention, on peut citer notamment : les presses-plieuses, les robots, les tracks, les magasins automatisés et les différents asservissements dont ils sont constitués, les AGV (pour *Automatic Guided Vehicles,* ces robots qui se déplacent de façon autonome sans intervention humaine, grâce à une technique de guidage quelconque), les systèmes de reconnaissance optique ou mécanique, les systèmes de retournement ou de reprise des pièces en cours de process (*regrip*), les magasins à outils de pliage, automatisés ou non, les systèmes de préhension des pièces manipulées par le robot, les systèmes de contrôle d'épaisseur, etc.

De l'analyse par les inventeurs de ces multiples fonctions et de leurs interactions, il ressort que seul les liens évidents ont été exploités dans l'art antérieur alors que d'autres synergies fonctionnelles majeures ont été négligées.

Les solutions proposées dans la présente demande sont liées à de nouveaux principes d'organisation spatiale des fonctions de la cellule rendus possibles par la conception d'un programme d'éléments de rangement et de stockage inédits et exclusivement dédiés à l'atteinte des objectifs poursuivis.

### Description de formes d'exécution préférées de l'invention

### Contexte général d'application de l'invention

La présente invention se rapporte à un ensemble d'éléments destinés à être utilisés respectivement pour le rangement ou le stockage d'outils et ainsi faire office de magasin ou d'étagères d'outils, pour la fixation de préhenseurs et ainsi faire office de dispositif de fixation de préhenseurs, et pour l'échange d'outils, de préhenseurs et/ou accessoires de rangement dans un système composé d'une cellule de pliage de tôles automatisée couplée à un magasin automatisé.

Toujours dans un cadre d'accroissement de l'autonomie de fonctionnement sans assistance humaine, un objectif technique est de réaliser une connexion entièrement automatisée de la cellule avec le magasin automatisé.

On entend par magasin automatisé un système de stockage automatisé comportant des espaces de rangement disposés le long d'allées et/ou en hauteur. Les entrées et sorties du matériel sont effectuées par des engins dont la coordination des mouvements et le guidage sont réalisés par un logiciel de gestion. Ces engins sont par exemple des transstockeurs, des convoyeurs, des portiques, des carrousels, etc. qui peuvent déplacer des pièces, des palettes, des plateaux, des caisses, etc. Dans le cas présent, le matériel stocké peut être constitué de longueurs de tôles à plat, de palettes comprenant des préhenseurs, des outils de pliage ou des intercalaires, de boîtes de rangement pour pièces finies de faible encombrement, etc.

On décrit ci-après un certain nombre de modalités d'exécution de ce système cellule/magasin permettant ou contribuant à une automatisation totale des flux entre la cellule et le magasin automatisé (pièces à plier, pièces pliées, outils de pliage, préhenseurs, accessoires de rangement, etc.).

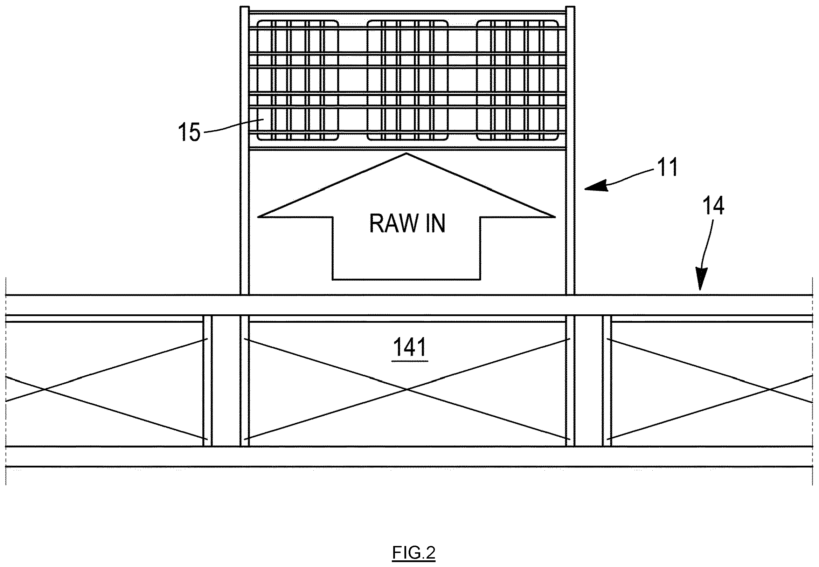

Selon une première forme d'exécution, représentée sur la FIG. 2, la solution consiste en un approvisionnement automatique de la cellule en pièces à plier (dans une zone spécifique 11 dite de *raw in*). L'approvisionnement est effectué à partir des tours 141 du magasin automatisé 14, généralement sur des palettes de dépose de pièces entrantes 15.

Si la connexion directe des machines de découpe au magasin automatisé est proposée depuis longtemps par un grand nombre de constructeurs de machines, la connexion d'une cellule de pliage au magasin n'est apparue que très récemment sur le site web de TRUMPF.

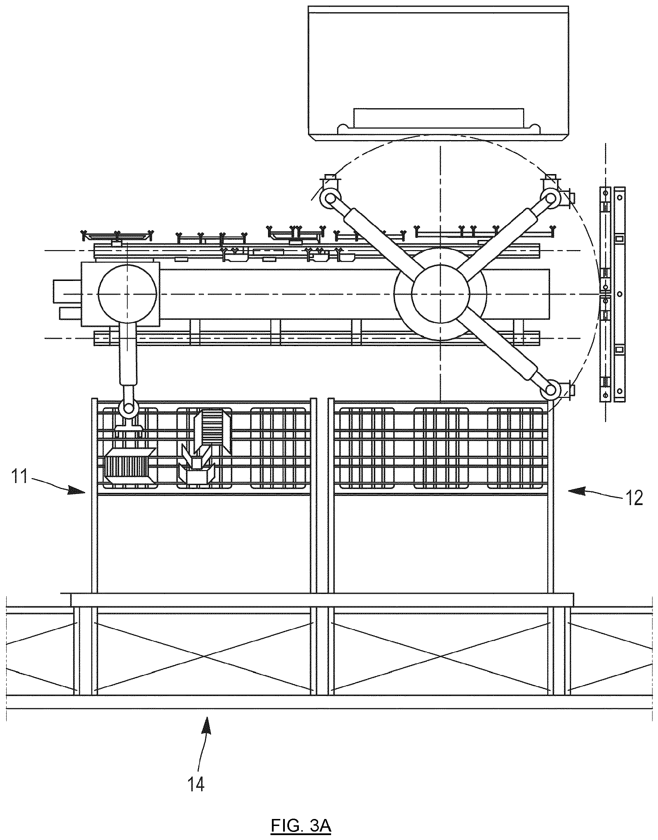

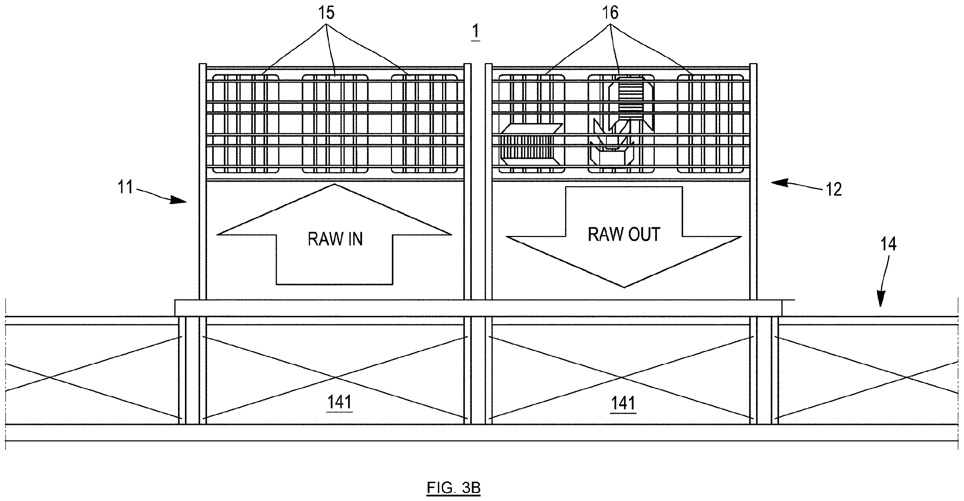

Selon une deuxième forme d'exécution, représentée sur les FIG. 3A et 3B, la solution consiste, à côté de l'approvisionnement en tôles précité à partir du magasin automatisé 14 dans la zone de *raw in* 11, en une évacuation automatique des pièces pliées vers le magasin automatisé 14, à partir de palettes 16 située dans la zone de dépose des pièces pliées (dite de *raw out*) 12, en vue de leur stockage ou de leur dispatching vers un autre poste de l'atelier.

Cette solution est avantageuse dans la mesure où l'évacuation automatique des pièces pliées constitue une des clés essentielles pour atteindre l'objectif général de départ, à savoir maximaliser l'autonomie de fonctionnement sans assistance d'un opérateur.

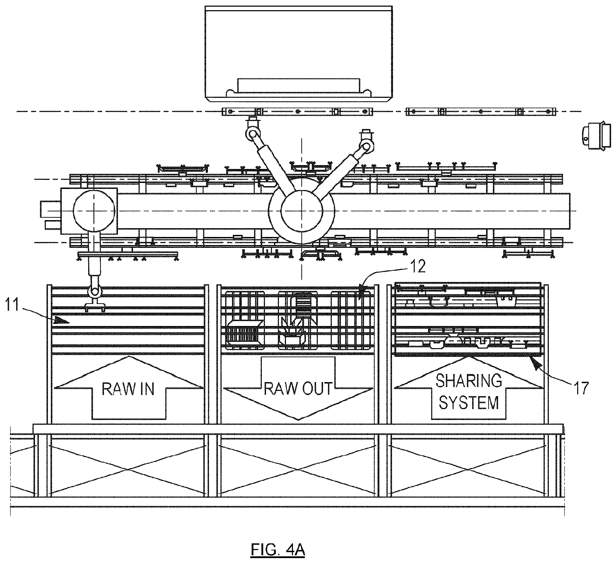

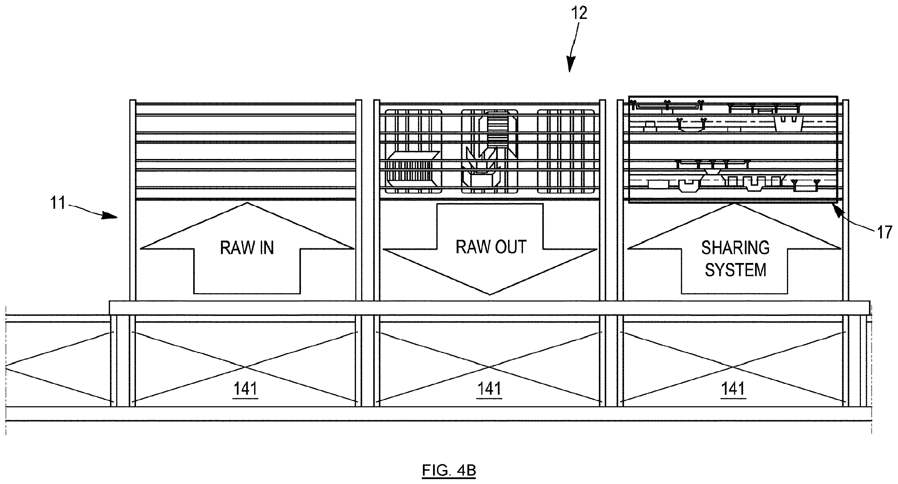

Selon une troisième forme d'exécution, représentée sur les FIG. 4A et 4B, la solution consiste à coupler au magasin automatisé 14 un système de partage d'outils et de préhenseurs 17 qui vient également en interface avec la cellule, tout comme le *raw in* et le *raw out* (*Tools* & *Grippers Sharing System).*

La connexion directe de la cellule de pliage 1 au magasin automatisé 14 pourrait trouver un avantage technique particulièrement intéressant dans le fait de permettre un partage entre plusieurs cellules 1, connectées au magasin 14 des outils de pliage et des préhenseurs.

Dans ce cas de figure, au moins trois tours de stockage 141 équipées d'un système de transfert seraient nécessaires.

Les avantages de ces solutions/architectures sont :
- la quantité de préhenseurs utilisables en mode automatisé serait alors pratiquement illimitée ;
- l'apport de nouveaux préhenseurs dans la cellule pourrait se faire sans l'aide d'un opérateur ;
- les préhenseurs, respectivement les outils, dédiés à un client ou à un produit spécifique pourraient être partagés entre plusieurs cellules et gérés en fonction de la charge de travail de chaque machine ;
- par rapport à la solution où chaque cellule est pourvue de tous les outils dont elle pourrait avoir besoin, cette solution permet de limiter le stock d'outils nécessaires et donc de réduire le coût du matériel immobilisé. Cette remarque est valable tant pour les outils de pliage que pour les préhenseurs et autres accessoires liés à l'empilage ou au « dropping » des pièces pliées.

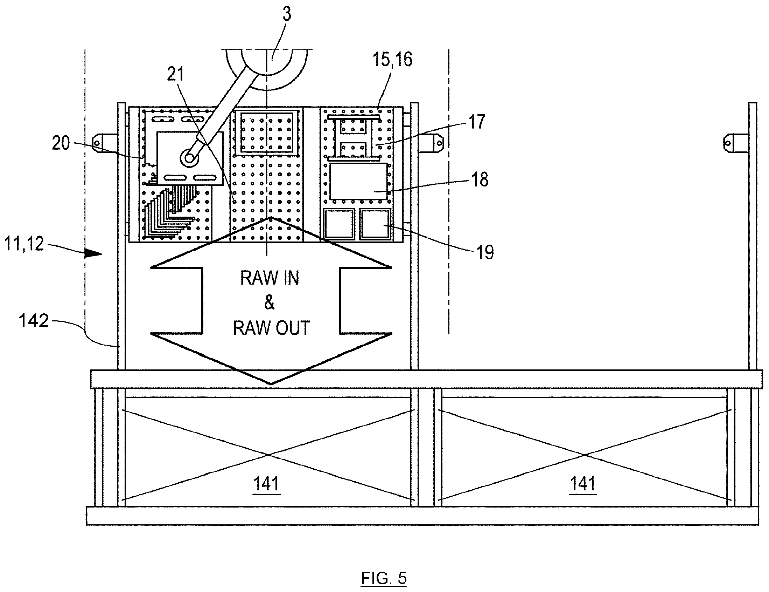

Selon une quatrième forme d'exécution, représentée sur la FIG. 5, la solution consiste en une combinaison de *raw in* et *raw out* sur une seule et même palette 15, 16. Cette solution est particulièrement avantageuse pour les mini-cellules où la presse-plieuse est de petit gabarit (1 - 1,5 m).

Si la proposition précédente consistait à gérer de manière séparée les flux entre la cellule 1 et le magasin automatisé 14, la présente proposition consiste à regrouper sur une seule et même palette 15, 16 les différents éléments à introduire dans la cellule et à évacuer de la cellule.

Dans l'exemple illustré ci-dessus, un convoyeur à chaîne 142 apporte à la cellule tout ce qui lui est nécessaire en vue de la réalisation d'une tâche donnée : les pièces à plier 20, une « surface » de dépose pour les pièces pliées 21 ou des contenants de type « drop box » 19, les outils spécifiques 17 requis pour le pliage ou la préhension des pièces, des intercalaires 18 pour l'empilement en couches des pièces pliées, etc.

Avantageusement, les préhenseurs seront disposés à plat dans le magasin automatisé et verticalement sur les étagères de la cellule. Il faut donc prévoir un système (par exemple plaques perforées avec orifices à 4 trous « en trèfle », voir ci-après) qui permet leur localisation dans les deux cas de figure.

Les apports techniques de la solution sont les suivants :
- la palette introduite dans la cellule est préparée suivant un plan précis et paramétré de telle sorte que le robot puisse identifier, avec le niveau de précision requis, la position des éléments qu'il aura à manipuler ;
- cette solution serait particulièrement adaptée aux micro-cellules qui pour les mêmes raisons que les grandes cellules gagneraient à être connectées au magasin automatisé ;
- cette solution où les palettes sont « plurifonctionnelles » plutôt que « spécialisées » serait également d'un grand intérêt pour les grandes cellules lorsque la flexibilité nécessaire aux petites séries est requise ;
- grâce à cette solution, la flexibilité n'est plus l'apanage des presses-plieuses servies par un opérateur ;
- la polyvalence des cellules de pliage automatisées rejoint les attentes du marché.

Une fois décrites les modalités de fonctionnement d'une cellule et d'un magasin dont les flux sont en mode « totalement » automatisé, on présente ci-après, selon la présente invention, une conception d'éléments de rangement et stockage, selon la présente invention, destinés à accroître considérablement l'autonomie de fonctionnement sans assistance, la flexibilité et la productivité d'une cellule de pliage automatisée.

Les éléments constitutifs de cette conception sont les suivants :

### 1. Paroi de fixation

La paroi 100 est constituée d'une plaque rigide, de taille et de proportion variable, pourvue d'une grille de perforations régulières sur tout ou partie de sa surface (selon deux directions perpendiculaires par exemple). La grille de perforations permet d'optimiser l'imbrication des préhenseurs et donc de maximaliser le nombre de préhenseurs stockables sur une surface donnée. Le pas régulier qui sépare les perforations 101 permet de localiser précisément les coordonnées (en abscisse et ordonnée) de chaque préhenseur et par la même occasion d'en programmer la manutention automatique par un robot.

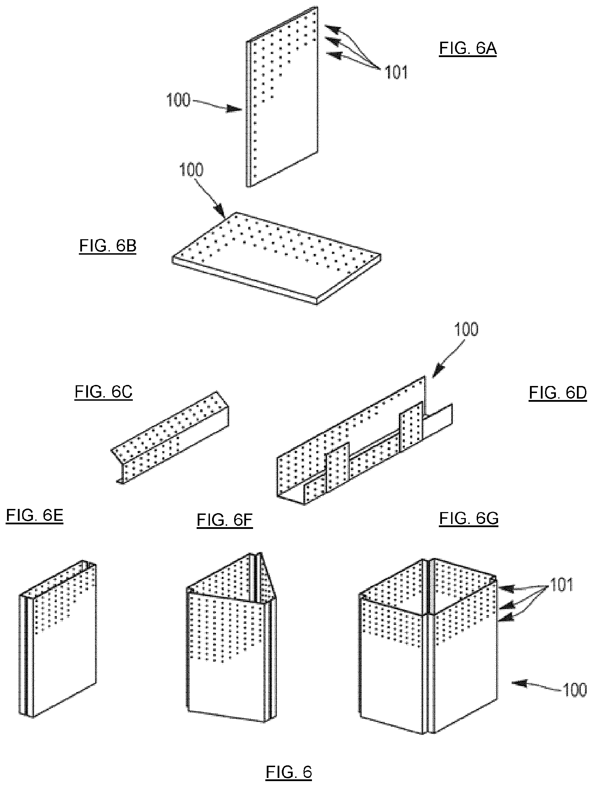

La paroi peut être positionnée indifféremment perpendiculairement au sol (FIG. 6A) ou parallèlement au sol (FIG. 6B). Une position oblique est également envisageable (FIG. 6C).

La paroi, si elle est métallique peut être rigidifiée par des pliages pour en faire un élément autoportant (FIG. 6A-6C).

Plusieurs éléments de paroi perforée peuvent être assemblés entre eux (FIG. 6D), comme par exemple le cas des supports de préhenseurs rattaché à des poutres présentant des petits préhenseurs en avant-plan et des grands préhenseurs en arrière-plan (voir ci-dessus).

Les éléments assemblés peuvent former des volumes comportant plusieurs faces d'accrochage (FIG. 6E, 2 faces ; FIG. 6F, 3 faces ; FIG. 6G, 4 faces).

### 2. Structure portante

Les parois perforées peuvent être fixées par un moyen quelconque à une structure portante 102.

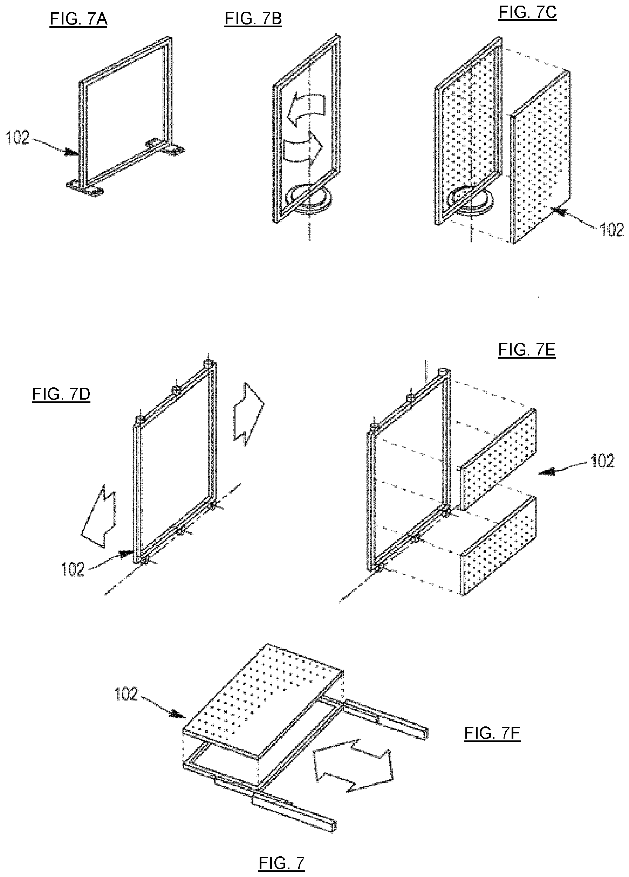

La structure peut avoir pour fonction de permettre la fixation de la paroi au sol (FIG. 7A).

La structure portante peut être conçue pour permettre sa rotation (FIG. 7B et FIG. 7C). Suivant que le volume comporte plusieurs faces (FIG. 6E-6G), la rotation permet d'accroître par exemple la capacité de stockage dans un espace réduit.

La structure portante peut également être conçue en vue de permettre un déplacement linéaire de la paroi perforée (FIG. 7D et FIG. 7E, cas du magasin d'outils/préhenseurs avec fenêtre, voir ci-dessus).

La structure portante peut également être constituée par les éléments de palettisation d'un magasin automatisé ou par tout autre élément susceptible de permettre le déplacement de la paroi perforée et de sa structure portante (FIG. 7F).

On présente ensuite des supports d'outillages divers.

### 3. Support d'outils de préhension

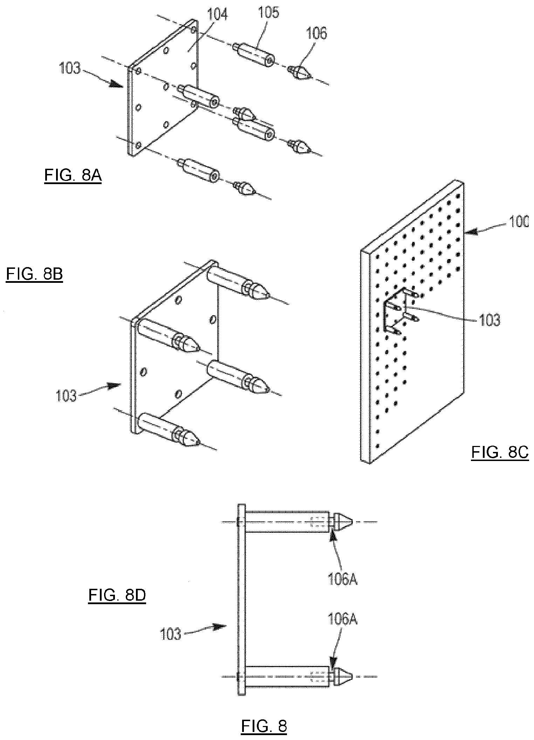

Les figures 8A, 8B, 8C et 8D décrivent à titre exemplatif un mode d'exécution préféré de support de préhenseur 103, permettant de fixer ce dernier à n'importe quel endroit de la paroi perforée.

Dans ce mode d'exécution, le support est constitué d'une platine de fixation 104, d'au moins 3 entretoises 105, de préférence 4 et de 4 axes à épaulement 106.

D'autres modes d'exécution du support 103 sont également envisageables. Par exemple en remplaçant les entretoises par un jeu de pliages faisant partie de la plaque de fixation. Une exécution moulée ou injectée du support est également possible.

Un dispositif de fixation rapide permet de fixer le support de préhenseur à n'importe quel endroit de la paroi perforée et indifféremment sur toutes les positions que peut prendre la paroi perforée (verticale, horizontale ou oblique).

Ainsi que le montre la vue de profil du support (FIG. 8D), les axes à épaulement 106 créent rainure 106A destinée à recevoir la platine de fixation du préhenseur.

### 4. Platine de fixation du préhenseur

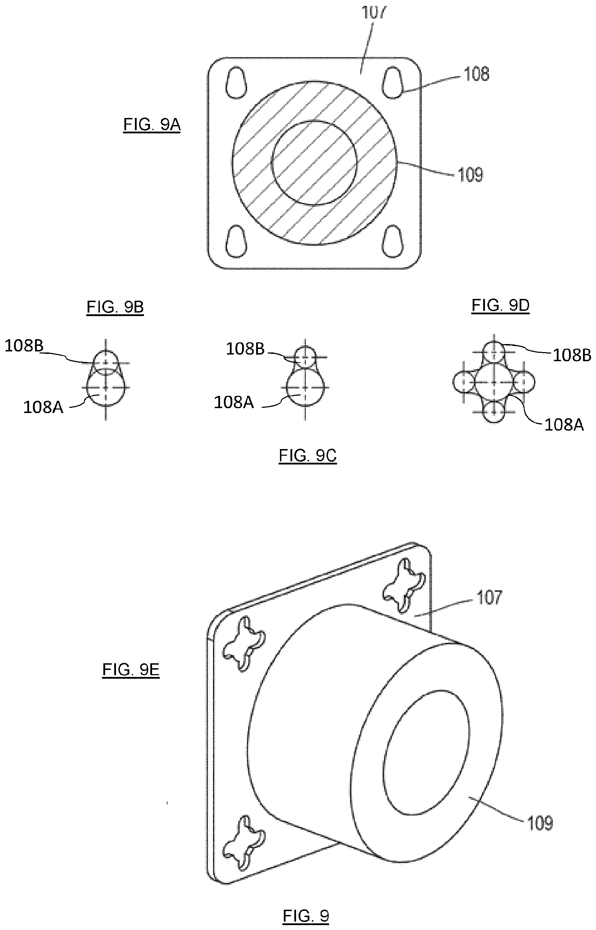

La platine de fixation du préhenseur 107 est pourvue au minimum de 3 trous de fixations 108 et de 4 trous dans la solution préférentielle (FIG. 9A).

La forme du trou est essentiellement un passage de forme entre deux trous de diamètre différents et décalés l'un par rapport à l'autre (trou de centrage 108A et trou de fixation 108B). La figure 9B montre un trou en forme de poire. La figure 9C montre une variante en forme de trou de serrure. La figure 9D montre une autre variante à 4 lobes (« trèfle à 4 feuilles »).

La figure 9E montre l'assemblage constitué par la tête mécanique 109 du préhenseur 9 et sa platine de fixation 107.

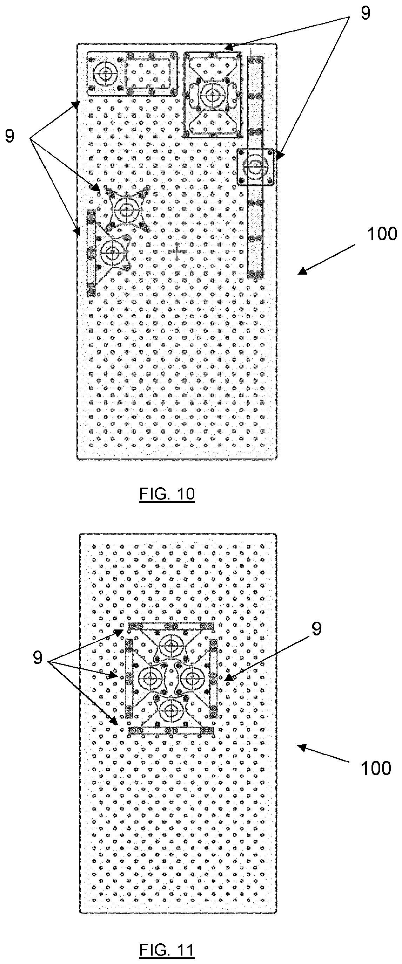

La figure 10 montre un groupe de préhenseurs 9 fixés à la paroi perforée 100. Le pas rapproché de la grille de perforations permet d'optimiser l'imbrication des préhenseurs 9 et par la même occasion de maximaliser le nombre de préhenseurs sur une surface donnée.

La figure 11 illustre l'avantage qui résulte de la solution des trous 108 à 4 lobes dont la platine de fixation du préhenseur peut être pourvue. Cette solution est particulièrement intéressante lorsque les préhenseurs ont une forme irrégulière ou asymétrique car elle permet de choisir entre 4 orientations possibles du préhenseurs. Cette solution contribue également à optimiser l'imbrication des préhenseurs et à en maximaliser le nombre sur une surface donnée.

### 5. Support d'outils de pliage

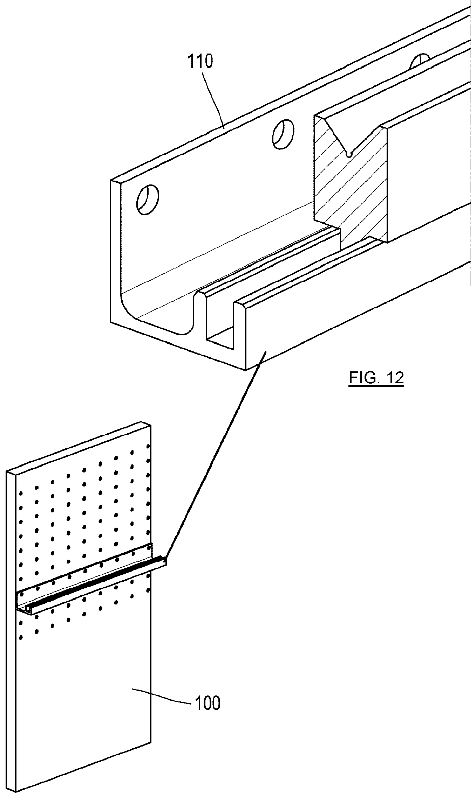

La figure 12 décrit à titre exemplatif un mode d'exécution de support 110 pour les outils de pliage.

Dans l'exemple illustré, le support 110 est constitué d'un profil en aluminium extrudé dont une des ailes sert à la fixation du profil sur la paroi perforée et l'autre comporte une rainure destinée à recevoir les poinçons et matrices de pliage. Avantageusement, le support pourra par exemple avoir une hauteur de 3m et une largeur de 1,5m.

D'autres formes d'exécution sont également possible comme l'usinage ou le profilage en ligne.

Le pas rapproché de la grille des perforations de la paroi permet d'optimiser la position des supports en fonctions de la hauteur des outils (par ex. 150-250mm) et d'en maximiser le nombre sur une surface donnée.

### 6. Autres supports et équipements amovibles et interchangeables

Parmi ces éléments figurent à titre non exhaustif :
- les supports pour outils de pliage standards ;
- les supports pour outils de pliage spéciaux ;
- les supports pour outils réservés à l'usage exclusif d'un client ;
- les supports pour préhenseurs universels ;
- les supports pour préhenseurs spécifiques ;
- les accessoires permettant d'optimiser l'empilage des pièces pliées et/ou de protéger les pièces fragiles ;
- les contenants destinés au « dropping » en vrac de pièces de faible encombrement ;
- les systèmes de palettisation destinés à l'approvisionnement de la cellule en pièces à plier ;
- les systèmes de palettisation destinés à la réception des pièces pliées ;
- les systèmes de palettisation mixtes ou plurifonctionnels ;
- les organisateurs de commandes, etc.

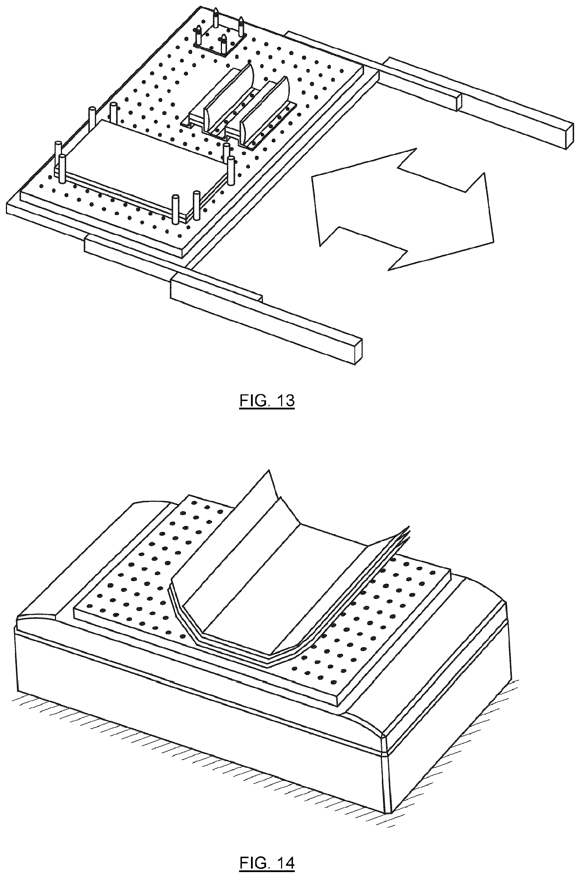

A titre d'exemples non limitatifs, la figure 13 montre un système de palettisation mixte et la figure 14 montre un véhicule à guidage automatique (AGV), tous deux munis d'un support à paroi perforée selon l'invention pour pièces entrantes ou sortantes dans le magasin automatisé.

Avantageusement, ce type de structure va permettre de définir des étagères qui peuvent aussi bien accueillir des outils de pliage que des préhenseurs. On peut multiplier les couches d'étagères et associer déplacement en translation et en rotation, ce qui va permettre de réduire le temps d'accès du robot.

Toujours avantageusement, des structures de type tour combinées à un robot intérieur peuvent être installées dans la cellule. Par exemple dans le cas d'une tour prismatique à base carrée, les outils sont positionnés via des rainures et des fenêtres peuvent être ménagées dans les quatre faces latérales, ce qui permet par exemple l'amenée des outils par deux premières faces et l'évacuation des outils par les deux autres faces.

Ces tours de stockage qui sont de véritables magasins de stockage peuvent interagir avec le magasin automatisé via des mouvements de translation avant-arrière.

L'axe du robot ne doit plus être perpendiculaire à un axe fixe de l'étagère mais peut rester fixe et pivoter d'une étagère à l'autre.

### Liste des repères de référence

- 1: cellule de pliage de tôles robotisée ou automatisée
- 2: presse-plieuse
- 3: robot
- 4: track
- 5: système de retournement (*regrip*)
- 6: système de mise à l'équerre
- 7: (magasin d')outils
- 8: magasin de préhenseurs
- 9: préhenseur
- 10: système de programmation et de monitoring
- 11: espace d'approvisionnement (*raw in*)
- 12: zone de dépose des pièces pliées (*raw out*)
- 13: console de commande
- 14: magasin automatisé
- 15: palette ou surface de dépose de pièces entrantes (raw in)
- 16: palette ou surface de dépose de pièces sortantes (raw out)
- 17: préhenseurs spécifiques (magasin automatisé)
- 18: Intercalaire
- 19: boîte de dépôt (*drop box*)
- 20: pièce à plier
- 21: surface de dépose pour pièces pliées
- 100: paroi de fixation perforée
- 101: Perforation
- 102: structure portante
- 103: support de préhenseur
- 104: platine de fixation
- 105: Entretoise
- 106: axe à épaulement
- 106A: Rainure
- 107: platine de fixation de préhenseur
- 108: trou de fixation
- 108A: trou de centrage
- 108B: trou de blocage
- 109: tête mécanique du préhenseur
- 110: support d'outil de pliage
- 141: tour de stockage dans le magasin automatisé
- 142: convoyeur/extracteur de palette à chaîne

## Revendications

1. Une installation autonome composée d'une cellule de pliage de tôles automatisée (1) et d'un magasin automatisé (14) auquel la cellule de pliage est couplée, comprenant un ensemble d'éléments destinés à être utilisés respectivement pour le rangement d'outils et ainsi faire office de magasin ou d'étagères d'outils (7), pour la fixation de préhenseurs (9) et ainsi faire office de dispositif de fixation (8) de préhenseurs (9), et pour l'échange d'outils (7), de préhenseurs (9) et/ou accessoires de rangement entre la cellule et le magasin automatisé, ledit ensemble d'éléments comprenant :
- des parois de fixation (100) pour outils (7) ou préhenseurs (9) ou utilisation comme interface dans un système de palettisation pour pièces entrantes et/ou sortantes de la cellule de pliage de tôles automatisée (1) couplée au magasin automatisé (14), les parois de fixation (100) comprenant chacune une plaque rigide pourvue d'une grille de perforations (101) à pas régulier sur au moins une partie de sa surface, plusieurs parois perforées (100, 101) pouvant être assemblées entre elles pour former des volumes comportant plusieurs faces d'accrochage ;
- des structures portantes (102) pour supporter les parois de fixation (100), les structures portantes (102) étant conçues pour permettre une rotation, un déplacement linéaire ou encore pour une fixation au sol des parois de fixation (100) ;
les parois de fixation (100) avec leurs grilles de perforation (101) et structures portantes (102) étant conçues pour être mises en commun et être interchangeables pour la fixation d'outils (7), de préhenseurs (9) ou comme interface dans un système de palettisation pour pièces entrantes et/ou sortantes de la cellule de pliage automatisée (1) couplée au magasin automatisé (14), l'ensemble d'éléments comportant des supports (103) pour les préhenseurs (9) à fixer sur les parois perforées (100, 101) et des platines de fixation (107) de préhenseurs venant s'assembler sur les supports (103), et des supports (110) pour les outils de pliage (7) à fixer sur les parois perforées (100, 101), lesdits supports (103, 110) s'insérant dans les perforations (101) des parois de fixation (100).

2. L'installation selon la revendication 1, **caractérisée en ce que** les parois de fixation (100) sont métalliques et rigidifiées par un ou plusieurs pliages, pouvant leur conférer un caractère autoportant et sont conçues pour être disposées verticalement, obliquement ou horizontalement

3. L'installation selon la revendication 1, **caractérisée en ce que** le support de préhenseur (103) comprend une platine de fixation (104) perforée avec, côté externe, au moins trois, et de préférence quatre entretoises (105) terminées par un axe à épaulement (106), la rainure (106A) de l'axe à épaulement (106) étant destinée à recevoir une platine de fixation de préhenseur (107), chaque entretoise (105) étant munie, côté interne, d'un moyen de fixation, par exemple un filetage ou un moyen de fixation rapide, à la paroi perforée de fixation (100, 101).

4. L'installation selon la revendication 3, **caractérisée en ce que** la platine de fixation de préhenseur (107) est solidaire d'une tête mécanique (109) du préhenseur (9) et comprend au moins trois, et de préférence quatre trous (108) de position correspondante à celle des entretoises (105) du support de préhenseur (103), chaque trou (108) se présentant comme un passage de forme entre deux trous de diamètres différents et décalés l'un par rapport à l'autre, un trou de centrage (108A) et un trou de blocage (108B) respectivement.

5. L'installation selon la revendication 4, **caractérisée en ce que** le trou (108) est asymétrique, par exemple en forme de poire, de trou de serrure ou de trèfle à quatre feuilles.

6. L'installation selon la revendication 1, **caractérisée en ce que** le support (110) d'outil de pliage (7) comprend un profil métallique, par exemple en aluminium extrudé, dont une première aile est destinée à la fixation du profil sur la paroi perforée (100, 101) et une seconde aile comporte une rainure destinée à recevoir des poinçons et matrices de pliage.

7. L'installation selon la revendication 1, **caractérisée en ce qu'**elle comprend un premier jeu de palettes (15) disposé dans la zone d'approvisionnement (11) pour l'approvisionnement entièrement automatisé des pièces à plier du magasin automatisé (14) vers la cellule (1), via la zone d'approvisionnement (11), et un second jeu de palettes (16) disposé dans la zone de dépose (12), pour l'évacuation entièrement automatisée des pièces après pliage de la cellule (1) vers le magasin automatisé (14), via la zone de dépose (12).

8. L'installation selon la revendication 7, **caractérisée en ce que** la zone d'approvisionnement (11) et la zone de dépose (12) coïncident, de même que le premier jeu et le second jeu de palettes (15, 16).

9. L'installation selon la revendication 1, **caractérisée en ce que** la cellule de pliage (1) est également couplée au magasin automatisé (14) via un système ou une zone de partages d'outils, de préhenseurs, d'intercalaires ou autres accessoires (17), situé(e) dans la cellule (1).

10. L'installation selon la revendication 1 ou 9, **caractérisée en ce qu'**elle comprend un convoyeur/extracteur de palette à chaîne (142) ou encore un ou plusieurs engins déplacés et guidés automatiquement, par exemple de type AGV pouvant supporter une palette, par exemple au moyen d'un dispositif mécanique à pantographe, pour l'approvisionnement de la cellule (1) en pièces à partir du magasin automatisé (14), respectivement le retour de pièces de la cellule (1) vers le magasin automatisé (14).

11. Utilisation d'une paroi de fixation (100) comprenant une plaque rigide pourvue d'une grille de perforations (101) à pas régulier sur au moins une partie de sa surface comme interface dans un système de palettisation pour pièces entrantes et/ou sortantes d'une cellule de pliage de tôles automatisée (1) couplée à un magasin automatisé (14), ladite paroi de fixation (100) étant supportée par une structure portante (102) et étant conçue également pour la fixation d'outils (7), de préhenseurs (9), la paroi de fixation (100) et structure portante (102) coopérant avec des supports (103) pour les préhenseurs (9) à fixer sur les parois perforées (100, 101) et des platines de fixation (107) de préhenseurs venant s'assembler sur les supports (103), et avec des supports (110) pour les outils de pliage (7) à fixer sur les parois perforées (100, 101).

12. Utilisation d'une paroi de fixation (100) comprenant une plaque rigide pourvue d'une grille de perforations (101) à pas régulier sur au moins une partie de sa surface comme interface dans un véhicule à guidage automatique AGV destiné à assurer le transport de pièces entrantes et/ou sortantes entre une cellule de pliage de tôles automatisée (1) et un magasin automatisé (14), ladite paroi de fixation (100) étant supportée par une structure portante (102) et étant conçue également pour la fixation d'outils (7), de préhenseurs (9), la paroi de fixation (100) et structure portante (102) coopérant avec des supports (103) pour les préhenseurs (9) à fixer sur les parois perforées (100, 101) et des platines de fixation (107) de préhenseurs venant s'assembler sur les supports (103), et avec des supports (110) pour les outils de pliage (7) à fixer sur les parois perforées (100, 101)..

## Patentansprüche

1. Autonome Anlage, die aus einer automatisierten Blech-Biegezelle (1) und einem automatisierten Lager (14) besteht, an welches die Biegezelle gekoppelt ist, wobei die Anlage verschiedene Elemente umfasst, die darauf ausgelegt sind, jeweils für das Folgende verwendet zu werden: für die Aufbewahrung von Werkzeugen und somit als Werkzeuglager oder Werkzeugregale (7) zu dienen, für die Befestigung von Greifern (9) und somit als Befestigungsvorrichtung (8) für die Greifer (9) zu dienen, und für den Austausch von Werkzeugen (7), Greifern (9) und/oder Aufbewahrungszubehör zwischen der Zelle und dem automatisierten Lager, wobei die gesamten Elemente Folgendes umfassen:
- Befestigungswände (100) für Werkzeuge (7) oder Greifer (9) oder zur Verwendung als Schnittstelle in einem Palettierungssystem für eintretende und/oder austretende Werkstücke der automatisierten Blech-Biegezelle (1), die an das automatisierte Lager (14) gekoppelt ist, wobei die Befestigungswände (100) jeweils eine starre Platte umfassen, die mit einem Gitter (101) mit Perforationen in regelmäßigen Abständen auf mindestens einem Teil seiner Oberfläche versehen ist, wobei mehrere perforierte Wände (100, 101) miteinander montiert werden können, um Volumina zu bilden, die mehrere Aufhängeseiten umfassen;
- tragende Strukturen (102), um die Befestigungswände (100) zu stützen, wobei die tragenden Strukturen (102) entworfen sind, um eine Drehung, eine lineare Bewegung, oder auch für eine Befestigung der Befestigungswände (100) auf dem Boden zu ermöglichen;
wobei die Befestigungswände (100) mit ihren perforierten Gittern (101) und tragenden Strukturen (102) entworfen sind, um gebündelt zu werden und für die Befestigung von Werkzeugen (7), von Greifern (9) oder als Schnittstelle in einem Palettierungssystem für eintretende und/oder austretende Werkstücke der automatisierten Biegezelle (1), die an das automatisierte Lager (14) gekoppelt ist, austauschbar zu sein, wobei die gesamten Elemente Träger (103) für die Greifer (9), die an den perforierten Wänden (100, 101) befestigt werden sollen, und Greiferbefestigungsplättchen (107), die auf den Trägern (103) montiert werden, und Träger (110) für die Biegewerkzeuge (7), die an den perforierten Wänden (100, 101) befestigt werden sollen, umfassen, wobei sich die Träger (103, 110) in die Perforationen (101) der Befestigungswände (100) einfügen.

2. Anlage nach Anspruch 1, **dadurch gekennzeichnet, dass** die Befestigungswände (100) metallisch und durch eine oder mehrere Biegungen, die den Wänden einen selbsttragenden Charakter verleihen können, versteift sind, und entworfen sind, um vertikal, quer oder horizontal angeordnet zu sein.

3. Anlage nach Anspruch 1, **dadurch gekennzeichnet, dass** der Greiferträger (103) ein perforiertes Befestigungsplättchen (104) umfasst, welches auf seiner äußeren Seite mindestens drei und vorzugsweise vier Abstandshalter (105) aufweist, welche an ihren Enden eine Welle mit einem Absatz (106) aufweisen, wobei die Nut (106A) der Welle mit Absatz (106) darauf ausgelegt ist, ein Greiferbefestigungsplättchen (107) aufzunehmen, wobei jeder Abstandshalter (105) auf seiner inneren Seite mit einem Mittel zur Befestigung an der perforierten Befestigungswand (100, 101), z. B. einem Gewinde oder einem Mittel zur schnellen Befestigung, ausgestattet ist.

4. Anlage nach Anspruch 3, **dadurch gekennzeichnet, dass** die Greiferbefestigungsplatte (107) fest mit einem mechanischen Kopf (109) des Greifers (9) verbunden ist und mindestens drei und vorzugsweise vier Löcher (108) umfasst, deren Position derjenigen der Abstandshalter (105) des Greiferträgers (103) entspricht, wobei jedes Loch (108) einen Formwechsel zwischen zwei Löchern darstellt, wobei die zwei Löcher verschiedene Durchmesser haben, voneinander versetzt sind und jeweils ein Zentrierungsloch (108A) und ein Blockierloch (108B) darstellen.

5. Anlage nach Anspruch 4, **dadurch gekennzeichnet, dass** das Loch (108) asymmetrisch ist und z. B. die Form einer Birne, eines Schlüssellochs oder eines vierblättrigen Kleeblatts aufweist.

6. Anlage nach Anspruch 1, **dadurch gekennzeichnet, dass** der Träger (110) des Biegewerkzeugs (7) ein metallisches Profil, z. B. aus extrudiertem Aluminium, umfasst, von dem ein erster Flügel darauf ausgelegt ist, das Profil an der perforierten Wand (100, 101) zu befestigen, und ein zweiter Flügel eine Nut umfasst, die darauf ausgelegt ist, Stempel und Biegematrizen aufzunehmen.

7. Anlage nach Anspruch 1, **dadurch gekennzeichnet, dass** sie einen ersten Satz von Paletten (15) umfasst, der im Versorgungsbereich (11) angeordnet ist, zur vollständig automatisierten Versorgung der Werkstücke, die gebogen werden sollen, vom automatisierten Lager (14) über den Versorgungsbereich (11) hin zur Zelle (1), und einen zweiten Satz von Paletten (16), der in der Ablagezone (12) angeordnet ist, zur vollständig automatisierten Entfernung der Werkstücke nach dem Biegen von der Zelle (1) über die Ablagezone (12) hin zum automatisierten Lager (14).

8. Anlage nach Anspruch 7, **dadurch gekennzeichnet, dass** der Versorgungsbereich (11) und der Ablagebereich (12) zusammenfallen, ebenso wie der erste Satz und der zweite Satz von Paletten (15, 16).

9. Anlage nach Anspruch 1, **dadurch gekennzeichnet, dass** die Biegezelle (1) ebenso an das automatisierte Lager (14) über ein System oder einen Bereich für die Teilung von Werkzeugen, Greifern, Zwischenschichten oder anderem Zubehör (17) gekoppelt ist, das/der sich in der Zelle (1) befindet.

10. Anlage nach Anspruch 1 oder 9, **dadurch gekennzeichnet, dass** sie einen Palettenförderer/-abzieher mit Ketten (142) oder auch ein oder mehrere automatisch bewegten und geführten Fahrzeuge umfasst, z. B. vom Typ AGV, das eine Palette tragen kann, z. B. mit Hilfe einer mechanischen Pantograph-Vorrichtung, zur Versorgung der Zelle (1) mit Werkstücken vom automatisierten Lager (14) bzw. zur Rückkehr von Werkstücken aus der Zelle (1) in das automatisierte Lager (14).

11. Verwendung einer Befestigungswand (100), die eine starre Platte umfasst, welche mit einem Gitter (101) mit Perforationen in regelmäßigen Abständen auf mindestens einem Teil seiner Oberfläche versehen ist, als Schnittstelle in einem Palettierungssystem für eintretende und/oder austretende Werkstücke einer automatisierten Blech-Biegezelle (1), die an das automatisierte Lager (14) gekoppelt ist, wobei die Befestigungswand (100) von einer tragenden Struktur (102) gestützt wird und ebenfalls für die Befestigung von Werkzeugen (7), Greifern (9) entworfen ist, wobei die Befestigungswand (100) und die tragende Struktur (102) mit Trägern (103) für die Greifer (9), die an den perforierten Wänden (100, 101) befestigt werden sollen, und Greiferbefestigungsplättchen (107), die auf die Träger (103) montiert werden, und mit Trägern (110) für die Biegewerkzeuge (7), die an den perforierten Wänden (100, 101) befestigt werden sollen, zusammenwirken.

12. Verwendung einer Befestigungswand (100), die eine starre Platte umfasst, welche mit einem Gitter (101) mit Perforationen in regelmäßigen Abständen auf mindestens einem Teil seiner Oberfläche versehen ist, als Schnittstelle in einem Fahrzeug mit automatisierter AGV-Führung, das darauf ausgelegt ist, den Transport von eintretenden und/oder austretenden Werkstücken zwischen einer automatisierten Blech-Biegezelle (1) und einem automatisierten Lager (14) sicherzustellen, wobei die Befestigungswand (100) von einer tragenden Struktur (102) gestützt wird und ebenfalls für die Befestigung von Werkzeugen (7), Greifern entworfen ist, wobei die Befestigungswand (100) und die tragende Struktur (102) mit Trägern (103) für die Greifer (9), die an den perforierten Wänden (100, 101) befestigt werden sollen, und Greiferbefestigungsplättchen (107), die auf die Träger (103) montiert werden, und mit Trägern (110) für die Biegewerkzeuge (7), die an den perforierten Wänden (100, 101) befestigt werden sollen, zusammenwirken.

## Claims

1. An autonomous installation consisting of an automated sheet-metal bending cell (1) and an automated magazine (14) to which the bending cell is coupled, comprising a set of elements intended to be used respectively for storing tools and thus to serve as a tool warehouse or tool shelves (7), for fastening grippers (9) and thus to serve as a fastening device (8) for grippers (9), and for exchanging tools (7), grippers (9) and/or storage accessories between the cell and the automated magazine, said set of elements comprising:
- fastening walls (100) for tools (7) or grippers (9) or for use as an interface in a palletizing system for parts entering and/or leaving the automated sheet-metal bending cell (1) coupled to the automated magazine (14), the fastening walls (100) each comprising a rigid plate provided with a grid having perforations (101) of regular pitch over at least part of its surface, several perforated walls (100, 101) being suitable for being assembled to one another in order to form volumes comprising several attachment faces;
- support structures (102) for supporting the fastening walls (100), the support structures (102) being designed to allow rotation, linear movement or fastening to the ground of the fastening walls (100);
the fastening walls (100) with their perforated grids (101) and support structures (102) being designed to be pooled and to be interchangeable for the fastening of tools (7), grippers (9) or as an interface in a palletizing system for parts entering and/or leaving the automated bending cell (1) coupled to the automated magazine (14), the set of elements comprising supports (103) for the grippers (9) to be fastened on the perforated walls (100, 101) and fastening platens (107) for grippers that are assembled on the supports (103), and supports (110) for the bending tools (7) to be fastened on the perforated walls (100, 101), said supports (103, 110) being inserted into the perforations (101) of the fastening walls (100).

2. The installation according to claim 1, **characterized in that** the fastening walls (100) are metallic and stiffened by one or several bending operations, which may give them a self-supporting nature, and are designed to be arranged vertically, obliquely or horizontally.

3. The installation according to claim 1, **characterized in that** the gripper support (103) comprises a perforated fastening platen (104) with, on the outer side, at least three, and preferably four, spacers (105) terminating in a shouldered axle (106), the groove (106A) of the shouldered axle (106) being designed to receive a gripper fastening platen (107), each spacer (105) being provided, on the inner side, with a fastening means to the perforated fastening wall (100, 101), for example a thread or a quick fastening means.

4. The installation according to claim 3, **characterized in that** the gripper fastening platen (107) is secured to a mechanical head (109) of the gripper (9) and comprises at least three, and preferably four, holes (108) having a position corresponding to that of the spacers (105) of the gripper support (103), each hole (108) assuming the form of a change of shape between two holes of different diameters which are offset relative to one another, a centering hole (108A) and a blocking hole (108B), respectively.

5. The installation according to claim 4, **characterized in that** the hole (108) is asymmetrical, for example in the shape of a pear, a keyhole or a four-leaf clover.

6. The installation according to claim 1, **characterized in that** the bending tool (7) support (110) comprises a metallic profile, for example made from extruded aluminum, a first wing of which is intended to fasten the profile on the perforated wall (100, 101) and a second wing of which comprises a groove designed to receive bending punches and dies.

7. The installation according to claim 1, **characterized in that** it comprises a first set of pallets (15) arranged in the supply area (11) for the fully automated supply of the parts to be bent from the automated magazine (14) toward the cell (1), via the supply area (11), and a second set of pallets (16) arranged in the depositing area (12), for the fully automated removal of the parts after bending from the cell (1) toward the automated magazine (14), via the depositing area (12).

8. The installation according to claim 7, **characterized in that** the supply area (11) and the depositing area (12) coincide, as do the first set and the second set of pallets (15, 16).

9. The installation according to claim 1, **characterized in that** the bending cell (1) is also coupled to the automated magazine (14) via a system or an area for sharing tools, grippers, inserts or other accessories (17), located in the cell (1).

10. The installation according to claim 1 or 9, **characterized in that** it comprises a chain pallet conveyor/extractor (142) or one or several vehicles moved and guided automatically, for example of the AGV type, able to support a pallet, for example using a mechanical pantograph device, to supply the cell (1) with parts from the automated magazine (14), respectively to return parts from the cell (1) to the automated magazine (14).

11. Use of a fastening wall (100) comprising a rigid plate provided with a grid having perforations (101) of regular pitch over at least part of its surface as an interface in a palletizing system for parts entering and/or leaving an automated sheet metal bending cell (1) coupled to an automated magazine (14), said fastening wall (100) being supported by a support structure (102) and also being designed for fastening tools (7), grippers (9), the fastening wall (100) and support structure (102) cooperating with supports (103) for the grippers (9) to be fastened on the perforated walls (100, 101) and gripper fastening platens (107) that are assembled on the supports (103), and with supports (110) for the bending tools (7) to be fastened on the perforated walls (100, 101).

12. Use of a fastening wall (100) comprising a rigid plate provided with a grid having perforations (101) of regular pitch over at least part of its surface as an interface in an automatically guided AGV vehicle intended to ensure the transport of entering and/or leaving parts between an automated sheet-metal bending cell (1) and an automated magazine (14), said fastening wall (100) being supported by a support structure (102) and also being designed to fasten tools (7), grippers (9), the fastening wall (100) and support structure (102) cooperating with supports (103) for the grippers (9) to be fastened on the perforated walls (100, 101) and gripper fastening platens (107) that are assembled on the supports (103), and with supports (110) for the bending tools (7) to be fastened on the perforated walls (100, 101).
